(19) Europäisches Patentamt
European Patent Office
Office européen des brevets

(11) **EP 3 344 417 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(21) Anmeldenummer: **16777893.5**

(22) Anmeldetag: **01.09.2016**

(51) Int Cl.:
***B23Q 7/00*** *(2006.01)*

(86) Internationale Anmeldenummer:
**PCT/AT2016/060046**

(87) Internationale Veröffentlichungsnummer:
**WO 2017/035550 (09.03.2017 Gazette 2017/10)**

(54) **FERTIGUNGSMODUL UND VERFAHREN ZUM BETREIBEN DES FERTIGUNGSMODULS**

MANUFACTURING MODULE AND METHOD FOR OPERATING THE MANUFACTURING MODULE

MODULE DE FABRICATION ET PROCÉDÉ POUR FAIRE FONCTIONNER CE MODULE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2015 AT 507602015**

(43) Veröffentlichungstag der Anmeldung:
**11.07.2018 Patentblatt 2018/28**

(73) Patentinhaber: **Sticht Technologie GmbH**
**4232 Hagenberg (AT)**

(72) Erfinder: **STICHT, Walter**
**4800 Attnang-Puchheim (AT)**

(74) Vertreter: **Burgstaller, Peter**
**Rechtsanwalt**
**Landstrasse 12**
**Arkade**
**4020 Linz (AT)**

(56) Entgegenhaltungen:
**WO-A1-2014/071431    WO-A1-2014/071432**

**Beschreibung**

Die Erfindung betrifft ein Fertigungsmodul zur Herstellung einer Baugruppe aus mehreren Teilen.

Den nächsten der Anmelderin bekannten Stand der Technik stellt die WO 2014071432 A1 dar. Diese betrifft eine Fertigungsanlage zur Herstellung einer Baugruppe aus mehreren Teilen und weist einen modularen Aufbau auf, bei welchem auf einheitlichen Tragrahmenmodulen mehrere einheitliche Lagerrahmenmodule nebeneinander angebracht sind. Jedes Lagerrahmenmodul weist vertikale Seitenwände auf, zwischen denen sich eine Linearantriebsführung einer Arbeitsstation erstreckt. Als Linearantriebsführung ist eine Führung zu verstehen, entlang deren Achse die Arbeitsstation durch einen Linearantrieb bewegbar ist. Pro Lagerrahmenmodul ist maximal eine Arbeitsstation mit maximal einer Teilebereitstellungsstation vorgesehen. Die Arbeitsstation kann eine Handhabungsvorrichtung sein, welche dazu dient ein Teil aus der Teilebereitstellungsstation zu übernehmen und in einen, durch eine Transportvorrichtung parallel zur Richtung, in welchen die Lagerrahmenmodule nebeneinander angebracht sind, bewegten Teileträger einzusetzen. Die Arbeitsstation kann auch eine Bearbeitungsvorrichtung sein, wie beispielsweise eine Fügevorrichtung zum stoffschlüssigen, kraftschlüssige oder formschlüssigen Verbinden von Teilen.

Da pro Lagerrahmenmodul maximal eine Arbeitsstation mit maximal einer Teilebereitstellungsstation vorhanden ist, ist pro Handhabungsvorgang, bestehend aus der Übernahme eines Teils von der Teilebereitstellungsstation und Übergabe an den bewegten Teileträger, jedenfalls zumindest ein Lagerrahmenmodul nötig.

Bei der Fertigung bzw. der Montage von Produkten oder Bauteilgruppen in kleiner bis mittlerer Stückzahl, sind die speziell auf das Erzeugnis abgestimmten automatisierten Fertigungslinien in der Anschaffung meist zu teuer, bzw. ist die Umrüstung einer Fertigungslinien von einer Serie auf eine andere Serie meist aufwendig. Bei kleinen, oder mittleren Serien werden üblicherweise viele Montageschritte in Handarbeit auf Montagearbeitsplätzen vorgenommen. Vorteilhaft ist, dass an einem Montagearbeitsplatz Montageschritte an vielen unterschiedlichen Produkten oder Bauteilgruppen durchgeführt werden können ohne Rüstaufwand. Nachteilig ist, dass bei manuellen Tätigkeiten keine absolut exakte Wiederholgenauigkeit erzielt werden kann und meist keine Möglichkeit der lückenlosen Dokumentation der Prozessparameter, wie beispielsweise von Einpresskräften, gegeben ist.

Die der Erfindung zugrunde liegende Aufgabe besteht darin ein Fertigungsmodul zu schaffen, welches Arbeitsschritte automatisiert ausführt, welche sonst in Handarbeit an Montagearbeitsplätzen ausgeführt werden und Arbeitsschritte ohne oder mit geringem Rüstaufwand an unterschiedlichen Produkten bzw. Bauteilgruppen vornehmen kann.

Ausgehend von der WO 2014071432 A1 bedeutet dies anstelle der Verkettung von einzelnen Lagerrahmenmodulen, an welchen jeweils maximal ein Montageschritt ausgeführt wird, eine Fertigungsmodul bereit zu stellen, welches zur Realisierung unterschiedlicher aufeinanderfolgender Montageschritte ohne Rüstaufwand geeignet ist.

Für das Lösen der Aufgabe wird vorgeschlagen pro Lagerrahmenmodul zumindest eine Handhabungsvorrichtung vorzusehen, wobei innerhalb der Wegstrecke, welche diese entlang der Linearantriebsführungen des Lagerrahmenmodules zurück legen kann, zumindest zwei Teilebereitstellungsstation vorgesehen sind.

Vorteilhaft daran ist, dass die Handhabungsvorrichtung zumindest zwei vollständige Handhabungsvorgänge, bestehend jeweils aus der Übernahme eines Teils von der Teilebereitstellungsstation und Übergabe an den bewegten Teileträger, vornehmen kann, wodurch die Verwendungsmöglichkeit eines Lagerrahmenmoduls erweitert wird. Da nur eine Handhabungsvorrichtung und ein Lagerrahmenmodul zur Durchführung mehrerer Handhabungsvorgänge Verwendung finden, ergibt sich eine wesentliche Kostenersparnis gegenüber dem bekannten System, bei welchem pro Handhabungsvorgang zumindest ein Lagerrahmenmodul und eine Handhabungsvorrichtung benötigt werden. Unvermeidlich ist, dass die gewonnene Flexibilität zu Lasten der Bearbeitungsgeschwindigkeit geht, welche bei einem Handhabungsvorgang pro Lagerrahmenmodul und Handhabungsvorrichtung maximal ist.

Bevorzugt sind an der Linearantriebsführung des Lagerrahmenmodules zumindest zwei Arbeitsstation unabhängig voneinander linear bewegbar angebracht, wobei zumindest eine dieser Arbeitsstationen eine Handhabungsvorrichtung ist. Bevorzugt ist zumindest eine Teilebereitstellungsstation derart ausgeführt, dass diese das zugeführte Teil direkt, also ohne Zutun einer Handhabungsvorrichtung, in den Teileträger übergibt. Bevorzugt weist die Handhabungsvorrichtung einen Manipulator insbesondere in Form eines Greifers auf, welcher unterschiedliche Teile von zumindest zwei Teilebereitstellungsstationen manipulieren kann.

Falls die bereitgestellten Teile von zumindest zwei Teilebereitstellungsstationen nicht durch einen Manipulator manipulierbar sind, weist die Handhabungsvorrichtung bevorzugt zumindest zwei unterschiedliche Manipulatoren auf.

Bevorzugt kann eine Arbeitsstation eine Handhabungsvorrichtung und eine Bearbeitungsvorrichtung aufweisen, sodass beispielsweise das Zusammenstellen mehrere Teile und Fügen dieser durch eine Arbeitsstation erfolgen kann.

Wie bereits beschrieben ist die gesamte Arbeitsstation entlang der Achse der Linearantriebsführung, welche sich parallel zur Transportrichtung des Teileträgers erstreckt, bewegbar. Um eine flexible Aufgabenerfüllung durch die Arbeitsstation zu ermöglichen, ist es zweckmäßig, dass diese zudem zwei weitere lineare Bewegungsachsen aufweist, wobei die linearen Bewegungsachsen gemäß der x, y und z- Achse eines kartesischen Koordinatensystems zueinander angeordnet sind. Alternativ oder zusätzlich kann eine Handhabungsvorrichtung oder eine Bearbeitungsvorrichtung auch eine oder mehrere rotatorische Achsen aufweisen. Beispielsweise kann an der Arbeitsstation, welche eine x, y und z- Bewegungsachse aufweist eine Handhabungsvorrichtung angebracht sein, welche eine rotatorische Achse aufweist, beispielsweise um eine komplexe Bewegung zur Teilezusammenstellung ausführen zu können. Eine Bearbeitungsvorrichtung kann beispielsweise ein Schweißroboter sein, welcher zusätzlich zu den x, y, z Achsen, eine rotarische Achse aufweist, zum Schwenken des Schweißkopfs.

Die erfindungsgemäßen Fertigungsmodule können für sich alleine eine Bearbeitungszelle bilden oder mit anderen erfindungsgemäßen oder bekannten Fertigungsmodulen eine Fertigungslinie ausbilden.

Die Erfindung wird an Hand von Zeichnungen veranschaulicht:

Fig. 1: zeigt ein beispielhaftes erfindungsgemäßes Fertigungsmodul in Ansicht von der Seite und von vorne.

Fig. 2: zeigt in seitlicher Detailansicht eine bevorzugte Ausführung einer Teilebereitstellungsvorrichtung des erfindungsgemäßen Fertigungsmoduls.

Fig. 3: zeigt in schematischer, perspektivischer Ansicht den Aufbau einer bevorzugten Arbeitsstationen des erfindungsgemäßen Fertigungsmoduls.

Fig. 4: zeigt zwei erfindungsgemäße Fertigungsmodule und ein bekanntes Fertigungssystem aus Einzelmodulen in einer beispielhaften Fertigungslinie.

Fig. 5: zeigt schematisch ein erfindungsgemäßes Fertigungsmodul mit einem durch die Arbeitsstation betätigbarem Montagehilfsmittel und Detailansicht des Montagehilfsmittels.

Das in den Figuren eingezeichnete x-y-z Koordinatensystem ist für alle Figuren ident, die Lage der Achsen gibt also die Lage der Bauteile in den unterschiedlichen Figuren bzw. Ansichten zueinander wieder.

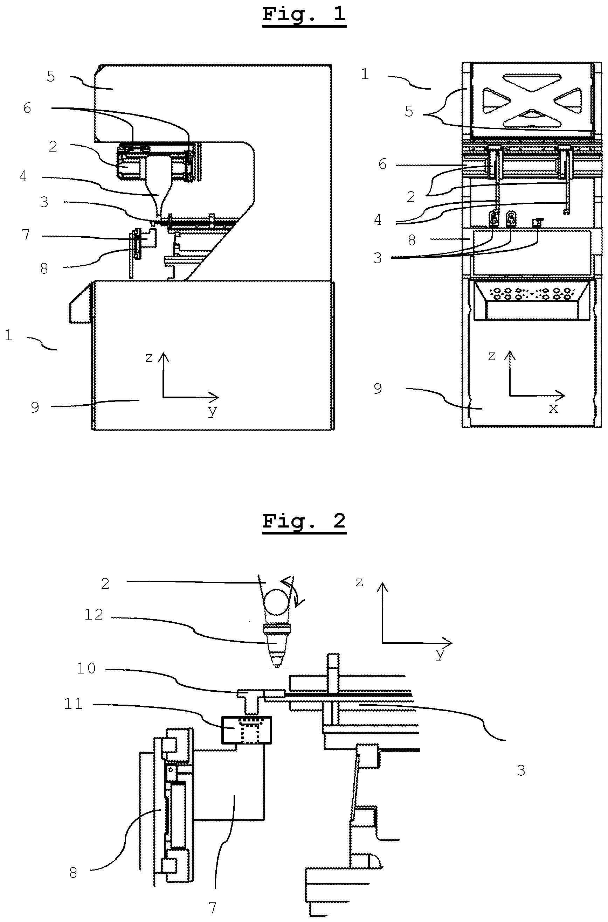

Das in Fig. 1 dargestellte beispielhafte erfindungsgemäße Fertigungsmodul 1 weist zwei Arbeitsstationen 2 und drei Teilebereitstellungsvorrichtungen 3 auf, wobei die Arbeitsstationen als Handhabungsvorrichtungen 4 ausgestaltet sind. Das Fertigungsmodul 1 ist durch vertikale Seitenwände 5 begrenzt, welche verwindungssteif miteinander verbunden sind zur Ausbildung eines stabilen Maschinenrahmens. Als Länge L des Fertigungsmoduls 1 wird hierin der Abstand von der Außenfläche der ersten Seitenwand 5 zur Außenfläche der zweiten Seitenwand 5 verstanden. Die Seitenwände 5 sind bevorzugt aus Mineralguss (auch bezeichnet als Polymerbeton oder Reaktionsharzbeton) gebildet, da dieser, insbesondere gegenüber Metallen wie Aluminium oder Gusseisen vorteilhaft schwingungsdämpfend wirkt und kostengünstig herstellbar ist. Insbesondere bei einer Länge L des Fertigungsmoduls 1 von über 360 mm ist die Mineralgussausführung besonders wertvoll, da die Schwingungsneigung mit zunehmender Länge L des Fertigungsmoduls steigt.

In Längsrichtung des Fertigungsmoduls 1 erstreckt sich zumindest eine Linearantriebsführung 6, bevorzugt über die gesamte Länge L des Fertigungsmoduls 1, wobei die Linearantriebsführung 6 am Maschinenrahmen des Fertigungsmoduls 1 befestigt ist. Die Arbeitsstationen 2 sind durch je einen Linearantrieb entlang dieser Linearantriebsführung 6 unabhängig voneinander automatisch verfahrbar. Wie in der Fig. 1 dargestellt, ist es vorteilhaft, wenn die Arbeitsstationen 2 an zwei Linearantriebsführung 6 geführt sind, wobei jede Arbeitsstation 2 für jede dieser Linearantriebsführung 6 einen Linearantrieb aufweist, welche synchron zueinander angesteuert werden. Die beiden Linearantriebsführung 6 sind in ihrer Längsrichtung, also der Bewegungsrichtung der Arbeitsstation 2, parallel zueinander ausgerichtet und weisen in Querrichtung einen Winkel von vorzugsweise 90° zueinander auf, wobei vorzugsweise die Querrichtung der ersten Linearantriebsführung 6 horizontal ausgerichtet ist, und die Querrichtung der zweiten Linearantriebsführung 6 senkrecht ausgerichtet ist. Durch das "doppelseitige" Antriebs- und Führungskonzept werden eine dynamische Verstellung der Arbeitsstationen 2 und ein robuster, schwingungssteifer Aufbau der Arbeitsstation 2 erreicht.

In Längsrichtung des Fertigungsmoduls 1 erstreckt sich des Weiteren eine Transportvorrichtung 8 für einen oder mehrere Teileträger 7, wobei die Transportvorrichtung 8 beispielsweise vorteilhaft mit Transportkette ausgeführt sein kann, eine solche Transportkette ist beispielsweise aus der WO 2014071433 A2 bekannt. Die Bewegungsrichtung des Teileträgers 7 und der Arbeitsstationen 2 entlang der Linearantriebsführung 6 sind parallel zueinander ausgerichtet.

Verfahrensgemäß ist es möglich, den Teileträger 7 kontinuierlich über die Länge L des Fertigungsmoduls 1 zu bewegen, wobei die Arbeitsstationen 2 innerhalb ihres Arbeitsbereichs dem Teileträger 7 folgen, während sie Arbeitsschritte an diesem ausführen. Beispielsweise kann die erste Arbeitsstation 2 erstens ein bereits von der ersten Teilebereitstellungsvorrichtung 3 aufgenommenes Teil in den Teileträger 7 einsetzen, sobald dieser in ihren Arbeitsbereich gelangt, zweitens wird die erste Arbeitsstation 2 zur zweiten Teilebereitstellungsvorrichtung 3 verfahren, um ein zweites Teil aufzunehmen und dieses in den Teileträger 7 einzusetzen, bevor er den Arbeitsbereich der erste Arbeitsstation 2 verlässt, drittens gegebenenfalls das Einsetzen eines weiteren Teils durch die dritte Teilebereitstellungsvorrichtung 3, beispielsweise indem das Teil direkt von dieser in den Teileträger übergeben wird. Sollte eine zweite Arbeitsstation 2 vorhanden sein, viertens Platzieren weiterer Teile gemäß des ersten und ggf. zweiten Schritts oder Fügen zumindest eines der zuvor eingesetzten Teile durch die zweite Arbeitsstation 2.

In Abwandlung des geschilderten Verfahrens ist es möglich, den Teileträger 7 getaktet zu transportieren, wobei dieser im Arbeitsbereich jeder Arbeitsstation 2 stoppt, bis diese die Arbeitsschritte an diesem vollzogen hat.

Wenn die Arbeitsstationen 2 sich überlappende Arbeitsbereiche aufweisen, kann es vorteilhaft vorgesehen sein, dass der Teileträger 7 in diesem Überlappungsbereich platziert wird, sodass beide Arbeitsstationen 2, nacheinander oder abwechselnd, Arbeitsschritte an diesem ausführen können.

Ein beispielhafter Ablauf könnte darin bestehen, dass erstens der Teileträger 7 in den Überlappungsbereich transportiert wird, während die erste Arbeitsstation 2, welche als Handhabungsvorrichtungen 4 ausgeführt ist, ein Teil von einer ersten Teilebereitstellungsvorrichtung 3 aufnimmt, zweitens die erste Arbeitsstation 2 das Teil in eine im Teileträger 7 befindliche Bauteilgruppe einsetzt, drittens die erste Arbeitsstation 2 aus dem Überlappungsbereich verfahren wird, um ein weiteres Teil einer zweiten Teilebereitstellungsvorrichtung 3 aufzunehmen, während die zweite Arbeitsstation 2 in Form einer Bearbeitungsvorrichtung einen Bearbeitungsschritt an der Bauteilgruppe vornimmt, beispielsweise das Fügen des zuvor eingesetzten Teils, viertens wird die zweite Arbeitsstation 2 aus dem Überlappungsbereich verfahren und die erste Arbeitsstation 2 setzt das zweite Teil ein, fünftens Taktung der Teileträger 7 und Aufnahme eines Teil von einer ersten Teilebereitstellungsvorrichtung 3 durch die erste Arbeitsstation 2. Als Abwandlung wäre denkbar, dass die beiden Arbeitsstation 2 keinen überlappenden Arbeitsbereich aufweisen, jedoch der Teileträger 7 durch Vor- und Rückwärtsbewegung abwechselnd in die Arbeitsbereiche transportiert wird.

Wie durch die grob skizzierten beispielhaften Verfahren verdeutlicht, können durch das einfache und platzsparende erfindungsgemäße Fertigungsmodul 1 viele unterschiedliche Prozesse realisiert werden, wobei diese Prozesse sehr einfach bis komplex sein können.

Das Fertigungsmodul 1 kann je nach Komplexität der zu realisierenden Prozesse mit unterschiedlich vielen Teilebereitstellungsvorrichtungen 3 und Arbeitsstation 2 innerhalb des Rahmenmoduls ausgestattet werden, wobei vorteilhaft vorgesehen ist, dass das Fertigungsmodul 1 ohne Umrüsten alle von diesem vorzunehmenden unterschiedlichen Prozesse ausführen kann, also alle Montageschritte und Fertigungsschritte für alle herzustellenden Produkte oder Bauteilgruppen beherrscht. In der Linearantriebsführung 6 kann die erforderliche Anzahl von Arbeitsstationen 2 eingesetzt und durch die entsprechende Anbindung (Anschluss von Versorgungsleitungen und Datenleitungen) integriert werden. Teilebereitstellungsvorrichtungen 3 können einfach auf einer mit bevorzugt einheitlichen Montagehilfen ausgestatteten Montageeben montiert werden, wobei auch hier vorgesehen ist, dass von den vorhandenen Teilebereitstellungsvorrichtungen 3 alle für die unterschiedlichen Produkte oder Bauteilgruppen benötigten Teile bereitgestellt werden können.

Das erfindungsgemäße Fertigungsmodul 1 ist daher bevorzugt eine Spezialmaschine, die bereits in der Planung hinsichtlich der Anzahl der Arbeitsstationen 2 und Teilebereitstellungsstationen 3 auf die zu erfüllenden Prozesse des Kunden ausgelegt wird. Ein nachträgliches Umrüsten, also das Hinzufügen oder der Tausch von Arbeitsstationen 2, Teilebearbeitungsstationen 3, oder deren Komponenten wie beispielsweise Greifern ist aber auch möglich. Wesentlich ist, dass im Gegensatz zu den Lagerrahmenmodulen der WO 2014071432 A1 die Anzahl an Teilebereitstellungsvorrichtungen 3 beim gegenständlichen Fertigungsmodul 1 nicht auf eine begrenzt ist.

In der WO 2014071432 A1 ist beschrieben, dass die Lagerrahmenmodule bevorzugt in einem Rasterabstand von zumindest 90 mm angebracht sind, wobei die Länge eines Lagerrahmenmoduls in x-Richtung diesem Rasterabstand entspricht. Innerhalb des Lagerrahmenmoduls ist maximal eine Teilebereitstellungsvorrichtungen 3 und maximal eine Arbeitsstation 2 vorhanden. Der Rasterabstand von 90 mm entspricht in etwa dem Platzbedarf einer Teilebereitstellungsvorrichtungen 3 und/oder einer Arbeitsstation 2.

Bevorzugt ist vorgesehen, den Rasterabstand von 90 mm für die Anordnung der Arbeitsstationen 2 und Teilebereitstellungsvorrichtungen 3 zu übernehmen, wobei die Länge L des Fertigungsmoduls 1 ein ganzzahliges Vielfaches dieses Rasterabstands ist. In der kleinsten denkbaren erfindungsgemäßen Ausführung weist das Fertigungsmoduls 1 eine Länge L von 180 mm (zweifacher Rasterabstand) auf, wobei zwei Teilebereitstellungsvorrichtungen 3 und eine Arbeitsstation 2 in Form einer Handhabungsvorrichtung 4 vorhanden sind.

Bevorzugt weist das Fertigungsmodul 1 eine Länge L von 720 mm (8-facher Rasterabstand) auf, wobei maximal acht Teilebereitstellungsvorrichtungen 3 und maximal sieben Arbeitsstation 2 vorhanden sein können, sodass zumindest zwei Teilebereitstellungsvorrichtungen 3 im Arbeitsbereich einer Arbeitsstation 2 liegen.

Bevorzugt sind jedoch bei einer Länge L von 720 mm nur zwei bis 3 Arbeitsstation 2 vorhanden, damit diese ausreichend Bewegungsfreiraum aufweisen. Als Bewegungsfreiraum kann die Anzahl der maximal erreichbaren Rastereinheiten pro Arbeitsstation 2 verstanden werden, beispielsweise kann bei Vorhandensein einer Arbeitsstation 2 diese in alle acht Rastereinheiten verfahren werden. Bei zwei Arbeitsstation 2 beträgt der Bewegungsfreiraum sieben Rastereinheiten, da zumindest die äußerste Rastereinheit durch die jeweils andere Arbeitsstation 2 belegt ist.

Die maximal zulässige Anzahl $A_{max}$ an Arbeitsstationen 2 innerhalb eines Fertigungsmodul 1 ergibt sich aus der Rasteranzahl N minus dem höchsten benötigten Bewegungsfreiraum $F_{max}$ einer Arbeitsstationen 2 plus eins.

$$A_{max} = N - F_{max} + 1$$

Der höchste benötigte Bewegungsfreiraum einer Arbeitsstation 2 ergibt sich aus der Distanz der beiden äußersten durch diese anzufahrenden Teilebereitstellungsvorrichtungen 3.

Umgekehrt könnte die minimal benötigte Rasteranzahl $N_{min}$ des Fertigungsmoduls 1 bei Kenntnis der benötigten Arbeitsstationenanzahl A und Kenntnis des höchsten benötigten Bewegungsfreiraums $F_{max}$ einer Arbeitsstation 2 berechnet werden als

$$N_{min} = A + F_{max} - 1$$

, wobei $F_{max}$ mindestens zwei ist.

Die Arbeitsstationen 2 sind innerhalb einer Rastereinheit entlang der Linearantriebsführung 6 bewegbar, bzw. innerhalb eines Bereichs aneinander angrenzender Rastereinheiten, welche nicht durch andere Arbeitsstationen 2 belegt sind, frei bewegbar, also von der Schrittweite des verwendeten Linearabtriebs abhängig, quasi kontinuierlich positionierbar. Fig. 2 zeigt in einer Detailansicht schematisch eine beispielhafte erfindungsgemäße Teilebereitstellungsvorrichtungen 3, welche ein Teil 10 direkt in eine am Teileträger 7 befindliche Baugruppe 11 einsetzt. Der Teil 10 wird von der Teilebereitstellungsvorrichtungen 3 in y-Richtung, als bevorzugt aus einer normal zur Bewegungsrichtung des Teilträgers 7 stehenden Richtung, bevorzugt von der Rückseite des Fertigungsmoduls 1 her, hin zum Teileträger 7 transportiert. Wenn der Teileträger 7, welcher durch die Transportvorrichtung 8 in x-Richtung bewegt wird, eine exakte Position bezüglich der Teilebereitstellungsvorrichtungen 3 eingenommen hat, wird das Teil 10 automatisch übergeben. Dies kann wie in Fig. 2 skizziert im einfachsten Fall durch die Schwerkraft erfolgen. Dazu wird das Teil 10 durch einen Greifer oder Magneten über der Bewegungsbahn des Teileträgers 7 gehalten und fallen gelassen, sobald sich das Teil 10 über der vorgesehenen Öffnung in der Bauteilgruppe 11 befindet. Eine andere Möglichkeit wäre, dass das Teil 10 durch einen Schieber oder nachdrückende Teile 10 aus einer Führung gestoßen wird. Eine weitere Möglichkeit wäre, dass die Teilebereitstellungsvorrichtungen 3 den Teil 10 aktiv in den Teileträger 7 oder die Bauteilgruppe 11 einsetzt, wobei die Teilebereitstellungsvorrichtungen 3 das Teil 10 bevorzugt in y- oder z-Richtung bzw. in einer in der y-z-Ebene liegenden Linie oder Kurve in den Teileträger 7 oder die Bauteilgruppe 11 einsetzt, wodurch die Teilebereitstellungsvorrichtungen 3 in der Regel mit einem Manipulator, welcher ein linear Bewegung oder eine Schwenkbewegung ausführt, das Auslangen findet.

Die direkte Übergabe von Teilen 10 durch die Teilebereitstellungsvorrichtungen 3 besteht beispielsweise im Einsetzen von Feder oder Bolzen in Bohrungen, Platzieren von Dichtscheiben, Beilagscheiben, Distanzhülsen etc. auf Bolzen oder Gewindebolzen, Ineinanderführung von Passteilen, Eindrehen von Schrauben entlang einer auf der y-z-Ebene liegenden Geraden. Vorteilhaft an dieser Ausführung ist, dass die Teilebereitstellungsvorrichtungen 3 bzw. deren Manipulator keine Bewegung in x-Richtung, also parallel zur Bewegungsrichtung des Teileträgers 7 ausführt, wodurch der Platzbedarf der Teilebereitstellungsvorrichtungen 3 möglichst gering ist. Komplexere Aufgaben können von den Arbeitsstationen 2 durchgeführt werden.

Die Arbeitsstation 2 ist in Fig. 2 als Bearbeitungsvorrichtung in Form eines Laserschweißkopfs 12 dargestellt. Die erfindungsgemäße Kombination von zumindest einer als Handhabungsvorrichtung 4 ausgeführten Arbeitsstation 2 und einer als Bearbeitungsvorrichtung ausgeführten Arbeitsstation 2 ist besonders wertvoll, da in einer beispielsweise geschlossenen Zelle komplexe Fertigungsprozesse bestehend aus dem Einsetzen und Fügen mehrerer Teile in beliebiger Reihenfolge realisiert werden kann.

Bevorzugt kann vorgesehen sein, dass die Handhabungsvorrichtung 4 und die Bearbeitungsvorrichtung zur Realisierung komplexer Aufgaben auch zusammenwirken können, beispielsweise indem ein Teil von der Handhabungsvorrichtung 4 an eine bestimmte Position eines im Teileträger 7 fixierten Bauteils bzw. einer Bauteilgruppe angehalten wird und vom Laserschweißkopf 12 an dieser Position angeschweißt wird.

Besonders komplexe Fertigungsprozesse lassen sich realisieren, wenn zwei Handhabungsvorrichtungen 4 und eine Bearbeitungsvorrichtung vorhanden sind, wobei die Bearbeitungsvorrichtung zwischen den beiden Handhabungsvorrichtungen 4 vorgesehen ist.

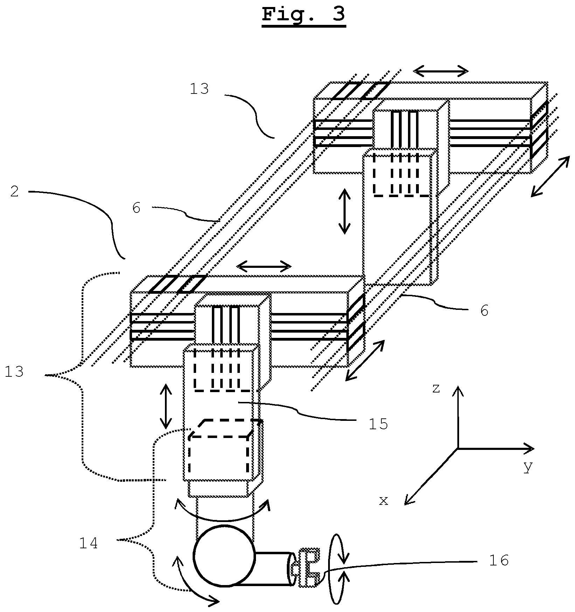

Die Arbeitsstationen 2 weisen bevorzugt einheitliche Linearführungseinheiten 13 auf, wie in Fig. 3 schematisch stark vereinfacht dargestellt. Dabei ist im Vordergrund eine Arbeitsstationen 2 bestehend aus Linearführungseinheiten 13 und Handhabungs- bzw. Bearbeitungseinheiten 14 dargestellt und im Hintergrund nur eine Linearführungseinheiten 13, wobei beide Linearführungseinheiten 13 beabstandet zueinander in der punktiert dargestellten Linearantriebsführung 6 gelagert und entlang dieser verfahrbar sind.

Die Linearantriebseinheit 13 weist eine erste entlang der Linearantriebsführung 6 in x-Richtung verstellbare Komponente, eine zweite entlang einer Führung an der ersten Komponente in y-Richtung verstellbare Komponente und eine dritte entlang einer Führung an der zweiten Komponente in z-Richtung verstellbare Komponente auf. Die dritte Komponente ist als Traganordnung 13 ausgeführt. Jede der drei Komponenten beinhaltet einen Linearantrieb, insbesondere den Läufer eines Linearmotors, welcher entlang der jeweils als zwei Doppellinien stilisierten Führungen verfährt, wobei die Führungen insbesondere den Stator des Linearmotors beinhaltet. Wie dargestellt und bereits zuvor beschrieben, ist es vorteilhaft, wenn die erste Komponente zwei starr miteinander verbundene Linearantriebe aufweist, die synchron zueinander entlang von zwei Führungen der Linearantriebsführung 6, deren Führungsflächen vorzugsweise in einem Winkel von 90° zueinander stehen, verfahrbar sind.

An der Traganordnung 13 kann die eigentliche Handhabungs- bzw. Bearbeitungseinheit 14 angebracht werden. Vorteilhaft an dieser Ausführung ist, dass beim Umrüsten des Fertigungsmoduls 1 die Linearführungseinheit 13 an Ort und Stelle verbleiben kann und nur die Handhabungs- bzw. Bearbeitungseinheit 14 getauscht werden kann. Vorteilhaft ist zudem, dass die einheitlichen Linearführungseinheit 13 im Fall eines Defektes besonders rasch ersetzt werden können.

Die Handhabungs- bzw. Bearbeitungseinheiten 14 eines Fertigungsmoduls 1 können auch einen einheitlichen Aufbau aufweisen, bevorzugt mit ein bis insbesondere drei rotatorischen Achsen einer Schwenkachseneinheit, welche bevorzugt durch drei Servomotoren realisiert ist, wobei die Handhabungs- bzw. Bearbeitungseinheiten 14 mit unterschiedlichen Arbeitseinheiten 15 bestückbar sind. Wie dargestellt kann die Handhabungs- bzw. Bearbeitungseinheiten 14 eine Arbeitseinheit 15 in Form eines Greifers aufweisen, oder wie in Fig. 2 dargestellt einen Fügevorrichtung wie beispielsweise ein Laserschweißkopf 12. Eine Handhabungs- bzw. Bearbeitungseinheiten 14 kann aber auch mit mehreren Arbeitseinheiten 15 bestückt sein, beispielsweise mit mehreren Handhabungswerkzeugen und/oder mehreren Bearbeitungswerkzeugen. Insbesondere kann eine Arbeitsstation 2 mehrere Handhabungswerkzeuge wie insbesondere Greifer aufweisen, wenn unterschiedliche Teile durch sie zu manipulieren sind. Weitere beispielhafte Arbeitseinheiten 15 sind Pressstempel, Spindelpressen, Schrauber, Nietvorrichtungen, Fräser oder Bohrer. Bevorzugt sind die Arbeitseinheiten 15 der Handhabungs- bzw. Bearbeitungseinheiten 14 austauschbar, beispielsweise sind so zum Umrüsten eines erfindungsgemäßen Fertigungsmoduls 1 von einem zusammenzustellenden Produkt auf ein anderes, nur die Greifer durch andere, auf die Einzelteile des anderen Produkts abgestimmte Greifer zu tauschen.

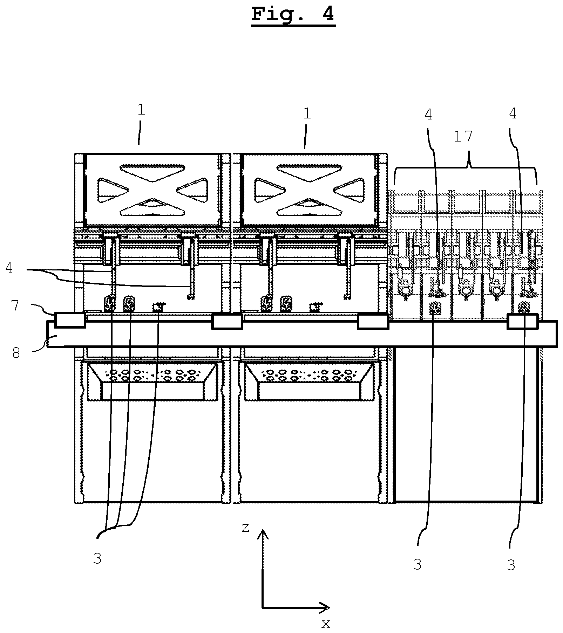

In Fig. 4 sind zwei erfindungsgemäße Fertigungsmodule 1 gezeigt, welche in eine Fertigungslinie integriert sind. Die Fertigungslinie weist eine Transportvorrichtung 8 auf welche zueinander beabstandete Teilehalter 7 parallel zu den Linearantriebsführungen 6 der Fertigungsmodule 1 bewegt. Zum direkten Vergleich ist in der Fig. 4 auch ein nach dem Stand der Technik bekanntes System 17 dargestellt. Beim bekannten System 17 sind mehrere Lagerrahmenmodule aneinander gereiht, wobei jedes Lagerrahmenmodul eine Arbeitsstation enthält, deren Bewegungsfreiheit auf das eine Lagerrahmenmodul beschränkt ist. Zwei der Arbeitsstationen des bekannten Systems 17 sind in Fig. 4 als Handhabungsvorrichtungen 4 dargestellt, wobei diese nur von der einen Teilebereitstellungsstationen 3 ihres Lagerrahmenmoduls Teile entnehmen können.

Die Bearbeitungsreihenfolge des bekannten Systems 17 könnte beispielsweise aus "Fügen - ein Teil platzieren - Fügen - Fügen - ein zweites Teil platzieren - Fügen" bestehen, wofür 5 Lagerrahmenmodule mit fünf Arbeitsstationen benötigt werden. Diese Bearbeitungsreihenfolge kann von einem gegenständlichen Fertigungsmodule 1 beispielsweise mit nur zwei Arbeitsstationen 2 abgearbeitet werden. Da die Arbeitsstationen 2 des gegenständlichen Fertigungsmoduls 1 die Aufgaben vorwiegend nacheinander an einem Teileträger 7 vornehmen und nicht zeitgleich an verschiedenen Teileträgern 7, wie es beim bekannten System 17 möglich ist, verlängert sich die Bearbeitungszeit pro Teileträger 7 entsprechend. Die gegenständliche Erfindung ist insbesondere daher bei kleinen bis mittelgroßen Stückzahlen eines zu fertigenden Produkts besonders wertvoll, da die Investitionskosten vergleichsweise gering sind und die Fertigungsmodule 1 nach Abarbeiten einer Serie vergleichsweise einfach an ein neues zu fertigendes Produkt angepasst werden können, im einfachsten Fall durch das Laden und Ausführen anderer Programmvorschriften.

Besonders vorteilhaft kann ein gegenständliches Fertigungsmodul 1 dazu eingesetzt werden, einen manuellen Montagearbeitsplatz zu ersetzen, da die erforderlichen wiederholten feinmotorischen Bewegungen wie etwa das Einsetzen von Federn und anderen Kleinteilen beim Monteur zu Ermüdungserscheinungen und oft sogar chronischen gesundheitlichen Problemen wie Sehnenscheidenentzündungen führen können. Zudem ergeben sich die Vorteile einer absolut exakten Wiederholgenauigkeit und die Möglichkeit der lückenlosen Dokumentation der Maschinenparameter und Messwerten.

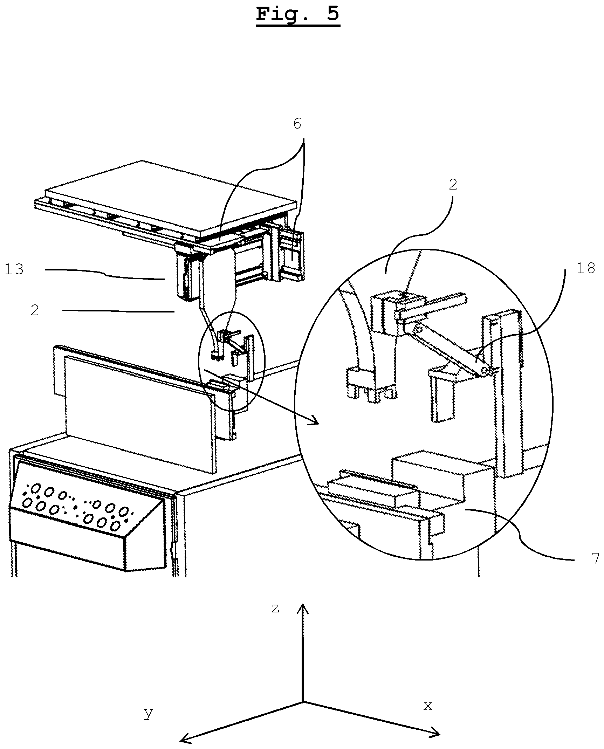

In Fig. 5 ist ein erfindungsgemäßes Fertigungsmodul 1, als Portalhandling zur Durchführung einer ansonsten oft manuell durchgeführter Tätigkeiten, schematisch in Ansicht von schräg oben dargestellt. Aus Gründen der Übersichtlichkeit sind die Seitenwände 5 des Fertigungsmodul 1 nicht dargestellt.

In diesem Beispiel wird durch die Arbeitsstationen 2 ein Arbeitsschritt vorgenommen, welcher in der Betätigung eines Montagehilfsmittels 18 besteht, welches sich im Bewegungsbereich der Arbeitsstation 2 befindet. Dieses Montagehilfsmittel 18 ist im Beispiel als Kniehebel dargestellt, welcher als Mittel zur Kraftverstärkung dient, beispielsweise um Teile mit Übergangs- oder Presspassung zusammen zu setzen. Diese Ausführungsvariante ist insbesondere vorteilhaft, da die Arbeitsstationen 2 über die Linearmotoren der Linearführungseinheit 13 nur eine begrenzte Kraft ausüben kann, wobei diese nicht exakt bestimmbar ist. Über den Kniehebel kann die Arbeitsstation 2 eine gemäß Hebelgesetz verstärkte Kraft ausüben, welche sich einfach aus dem zurückgelegten Weg der Arbeitsstation 2 bei Betätigung des Hebels bestimmen lässt. Zudem kann vorteilhaft vorgesehen sein, dass an der Arbeitsstation 1, an jener Fläche, welche als Betätigungsfläche auf den Kniehebel bzw. das Montagehilfsmittel 18 wirkt, ein Druck- bzw. Kraftsensor angebracht ist, durch welchen die von der Arbeitsstation 1 aufgewendete Kraft bestimmbar ist. Weniger bevorzugt kann der Druck- bzw. Kraftsensor auch am Montagehilfsmittel 18 angebracht sein. Beispielsweise kann über das Hebelgesetz die Einpresskraft für jedes eingepresste Teil sowohl aus den Bewegungsdaten als auch aus den Daten des Kraftsensors errechnet und gespeichert werden, was vorteilhaft zur Qualitätsüberwachung und einer lückenlosen Dokumentation der gefertigten Produkte genutzt werden kann.

In einer erfindungsgemäßen Ausführungsvariante ist vorgesehen, dass durch eine Arbeitsstation 2, zumindest ein Teil von einer Teilebereitstellungsstation 3 entnommen wird und ein Montagehilfsmittel 18 betätigt wird, wobei die Teilebereitstellungsstation 3 und das Montagehilfsmittel 18 auf der Montageplatte des Fertigungsmoduls 1 ortsfest montiert sind (nicht dargestellt).

In einer bevorzugten Ausführungsvariante ist vorgesehen, dass das Montagehilfsmittel 18 über einer Teilebereitstellungsstation 3 angeordnet ist, oder ein Teil der Teilebereitstellungsstation 3 ist, wobei das Montagehilfsmittel 18 bei Betätigung auf ein von der Teilebereitstellungsstation 3 bereitgestelltes Teil wirkt und dieses dadurch von der Teilebereitstellungsstation 3 direkt in den Teileträger 7 bzw. eine von diesem transportierte Bauteilgruppe eingesetzt wird.

Als Überbegriff für die Teilebereitstellungsstation 3 und das Montagehilfsmittel 18 wird der Begriff Teilemanipulator eingeführt.

Als Montagehilfsmittel 18 kommen insbesondere klassische manuell betätigbare Werkzeuge in Frage, insbesondere solche die über einen Hebel bedient werden, wie beispielsweise Pressen, Nieter, Zangen, Schneidzangen oder Stanzer.

**Patentansprüche**

1.  Fertigungsmodul (1) das einen Maschinenrahmen und eine daran montierte Linearantriebsführung (6) aufweist, entlang deren Achse zumindest eine Arbeitsstation (2) mit einem Linearantrieb automatisiert bewegbar ist, wobei das Fertigungsmodul in Richtung der besagten Achse eine Länge L aufweist und seitlich durch je eine Seitenwand (5) begrenzt ist, **dadurch gekennzeichnet, dass** es über seine Länge L eine Rastereinheitenanzahl N von zumindest zwei aufweist wobei pro Rastereinheit eine Teilebereitstellungsstation (3) montierbar und eine Arbeitsstation (2) an der Linearantriebsführung (6) anbringbar ist, wobei zumindest zwei Teilebereitstellungsstationen (3) an Rastereinheiten montiert sind und zumindest eine Arbeitsstation (2) an der Linearantriebsführung (6) linear bewegbar angebracht ist, die als Handhabungsvorrichtung (4) ausgeführt ist und durch die von zumindest zwei Teilebereitstellungsstationen (3) Teile entnehmbar sind und die Arbeitsstationenanzahl A kleiner oder gleich dem durch die Formel

$$A = N - F_{max} + 1$$

ermittelten Wert ist, wobei der maximale Bewegungsfreiraum $F_{max}$ jene Anzahl von Rastereinheiten ist, die in jenem Bereich liegen, welcher die beiden Teilebereitstellungsstationen (3), welche am weitesten voneinander entfernt liegen und von denen durch eine Arbeitsstation (2) Teile zu entnehmen sind, einschließt.

2.  Fertigungsmodul (1) nach Anspruch 1, **dadurch gekennzeichnet, dass** zumindest zwei Arbeitsstationen (2) an der Linearantriebsführung (6) linear bewegbar angebracht sind, wobei bevorzugt zumindest eine Arbeitsstation (2) eine Bearbeitungsvorrichtung ist.

3.  Fertigungsmodul (1) nach einem der Ansprüche 1 bis 2, **dadurch gekennzeichnet, dass** zumindest zwei Arbeitsstationen (2) je eine einheitliche Linearführungseinheit (13) aufweisen, wobei jede Linearführungseinheit (13) eine erste entlang der Linearantriebsführung (6) also in x-Richtung verstellbare Komponente, eine zweite entlang einer Führung an der ersten Komponente in eine Richtung, die einen Winkel von 90° zur x-Richtung einschließt, verstellbare Komponente und eine dritte entlang einer Führung an der zweiten Komponente in eine Richtung, die einen Winkel von 90° zur x-Richtung und zur Bewegungsrichtung der zweite Komponente einschließt, verstellbare Komponente aufweist.

4.  Fertigungsmodul (1) nach Anspruch 3, **dadurch gekennzeichnet, dass** an der dritten Komponente der Linearführungseinheit (13) eine Handhabungs- oder Bearbeitungseinheit (14) befestigt ist, welche zumindest eine vorzugsweise drei rotatorische Achsen aufweist und die mit zumindest einer Arbeitseinheit (15) bestückt ist, mit der zumindest ein Handhabungsvorgang oder zumindest ein Bearbeitungsschritt vorgenommen werden kann.

5.  Fertigungsmodul (1) nach einem der Ansprüche 1 bis 4, **dadurch gekennzeichnet, dass** parallel zur Achse der Linearantriebsführung (6) die Bewegungsrichtung eine Transportvorrichtung (8) verläuft, durch welche zumindest ein Teileträger (7) entlang der Länge L des Fertigungsmoduls (1) bewegbar ist.

6. Fertigungsmodul (1) nach Anspruch 5, **dadurch gekennzeichnet, dass** die Teilebereitstellungsstationen (3) von der der Transportvorrichtung (8) abgewandten Seite des Fertigungsmoduls (1) her in einem Winkel von 90° zur Bewegungsrichtungsrichtung des Teileträgers (7) verlaufen.

7. Fertigungsmodul (1) nach einem der Ansprüche 5 bis 6, **dadurch gekennzeichnet, dass** zumindest eine Teilebereitstellungsstation (3) vorhanden ist, durch die ein Teil (10) direkt in den Teileträger (7), oder in das von diesem transportierte Bauteil oder in die Bauteilgruppe (11) einsetzbar ist.

8. Fertigungsmodul (1) nach einem der Ansprüche 1 bis 7, **dadurch gekennzeichnet, dass** der Teileträger (7) an einer Position innerhalb einer Rastereinheit, welche durch zumindest zwei Arbeitsstationen (2) zeitlich nacheinander erreichbar ist, positioniert ist.

9. Fertigungsmodul (1) nach einem der Ansprüche 1 bis 8, **dadurch gekennzeichnet, dass** die Rastereinheitenanzahl N zumindest sechs beträgt, bevorzugt exakt acht.

10. Verfahren zum Betrieb eines Fertigungsmoduls (1) nach einem der Ansprüche 1 bis 9, **dadurch gekennzeichnet, dass** das Fertigungsmodul (1) zumindest zwei Teilemanipulatoren aufweist, welche als Teilebereitstellungsstationen (3) und/oder als Montagehilfsmittel (18) vorliegen, und das Fertigungsmodul (1) zumindest eine Arbeitsstation (2) aufweist, die als Handhabungsvorrichtung (4) ausgeführt ist, wobei die Handhabungsvorrichtung (4) an zumindest zwei Teilemanipulatoren jeweils zumindest einen Arbeitsschritt vornimmt, wobei als Arbeitsschritt

     - ein Teil von einer Teilebereitstellungsstationen (3) entnommen und in einem Teileträger (7) oder einem von diesem bereits aufgenommenen Bauteil oder in einer Bauteilgruppe platziert wird,
     - oder ein Teil, welches von der Teilebereitstellungsstation (3) bereitgestellt wird, oder bereits in einem Teileträger (7) oder einem Bauteil oder einer Bauteilgruppe eingesetzt ist, durch Betätigung des Montagehilfsmittels (18) manipuliert oder bearbeitet wird.

11. Verfahren nach Anspruch 10, **dadurch gekennzeichnet, dass** zumindest zwei Arbeitsstationen (2) an der Linearantriebsführung (6) befestigt sind und entlang der Achse der Linearantriebsführung (6) bewegt werden wobei die Arbeitsstationen (2) unabhängig voneinander Positionen entlang der Linearantriebsführung (6) einnehmen und zumindest zwei Arbeitsstationen (2) zeitlich nacheinander eine idente Position entlang der Linearantriebsführung (6) einnehmen können.

12. Verfahren nach einem der Ansprüche 10 bis 11, **dadurch gekennzeichnet, dass** zumindest zwei Arbeitsstationen (2) abwechselnd Arbeitsschritte am Teileträger (7) oder an dem von diesem transportierten Bauteil oder der Bauteilgruppe (11) vornehmen oder zumindest zwei benachbarte Arbeitsstationen (2) zeitgleich Arbeitsschritte am Teileträger (7) oder an dem von diesem transportierten Bauteil oder der Bauteilgruppe (11) vornehmen.

13. Verfahren nach einem der Ansprüche 10 bis 12, **dadurch gekennzeichnet, dass** zumindest eine Arbeitsstation (2), die als Handhabungsvorrichtungen (4) ausgeführt ist, und zumindest eine Arbeitsstation (2), die eine Fügevorrichtung wie insbesondere einen Laserschweißkopf (12) aufweist, Arbeitsschritte am Teileträger (7) oder an dem von diesem transportierten Bauteil oder der Bauteilgruppe (11) vornehmen.

14. Verfahren nach einem der Ansprüche 10 bis 13, **dadurch gekennzeichnet, dass** das Montagehilfsmittel (18) einen Hebel, oder Kniehebel aufweist, welcher durch eine Arbeitsstation (2) betätigt wird, wodurch das Montagehilfsmittel (18) ein Bearbeitungs- oder Manipulationsschritt an einem Teil, welches von der Teilebereitstellungsstation (3) bereitgestellt wird, oder bereits im Teileträger (7) oder einem Bauteil oder einer Bauteilgruppe platziert ist, durchführt, wobei die durch das Montagehilfsmittel (18) zur Bearbeitung oder Manipulation des Teils ausgeübte Kraft größer ist, als jene die die Arbeitsstation (2) zur Betätigung des Hebels oder Kniehebels aufbringt.

15. Verfahren nach Anspruch 14, **dadurch gekennzeichnet, dass** die vom Montagehilfsmittel (18) ausgeübte Kraft aus dem zurückgelegten Weg der Arbeitsstation (2) bei Betätigung des Hebels oder Kniehebels bestimmt wird
oder dass an der Arbeitsstation (1), an jener Fläche, welche als Betätigungsfläche auf das Montagehilfsmittel (18) wirkt, ein Druck- oder Kraftsensor angebracht ist, durch welchen die von der Arbeitsstation (1) aufgewendete Kraft beim Betätigen des Montagehilfsmittels (18) gemessen wird.

## Claims

1. Manufacturing module (1) which has a machine frame and a linear drive guide (6) mounted thereon, along the axis of which guide at least one workstation (2) can be automatically moved by means of a linear drive, the manufacturing module having a length L in the direction of said axis and being delimited on each side by a lateral wall (5), **characterized in that** the module has a number N of grid units of at least two over its length L, it being possible to mount one parts supply station (3) per grid unit and it being possible to attach one workstation (2) per grid unit to the linear drive guide (6), at least two parts supply stations (3) being mounted on grid units and at least one workstation (2) being attached to the linear drive guide (6) so as to be linearly movable, which workstation is designed as a handling device (4) and, by means of which workstation, parts can be removed from at least two parts supply stations (3) and the number of workstations A is less than or equal to the value determined by the formula

$$A = N - F_{max} + 1$$

where the maximum movement clearance $F_{max}$ is the number of grid units which are in the region that encloses the two parts supply stations (3) which are furthest apart from one another and from which parts are to be removed by one workstation (2).

2. Manufacturing module (1) according to claim 1, **characterized in that** at least two workstations (2) are attached to the linear drive guide (6) so as to be linearly movable, preferably at least one workstation (2) being a processing device.

3. Manufacturing module (1) according to either claim 1 or claim 2, **characterized in that** at least two workstations (2) each have a unitary linear guide unit (13), each linear guide unit (13) having a first component which can be adjusted along the linear drive guide (6) in the x-direction, a second component which can be adjusted along a guide on the first component in a direction which includes an angle of 90° with respect to the x-direction, and a third component which can be adjusted along a guide on the second component in a direction which includes an angle of 90° with respect to the x-direction and with respect to the direction of movement of the second component.

4. Manufacturing module (1) according to claim 3, **characterized in that** a handling or processing unit (14) is fastened to the third component of the linear guide unit (13), which handling or processing unit has at least one, preferably three, rotary axes and is provided with at least one work unit (15) by means of which at least one handling process or at least one processing step can be carried out.

5. Manufacturing module (1) according to any of claims 1 to 4, **characterized in that** the direction of movement of a transport device (8) extends in parallel with the axis of the linear drive guide (6), by means of which transport device at least one parts carrier (7) can be moved along the length L of the manufacturing module (1).

6. Manufacturing module (1) according to claim 5, **characterized in that** the parts supply stations (3) extend from the side of the manufacturing module (1) facing away from the transport device (8), at an angle of 90° with respect to the direction of movement of the parts carrier (7).

7. Manufacturing module (1) according to either claim 5 or claim 6, **characterized in that** at least one parts supply station (3) is present, by means of which a part (10) can be inserted directly into the parts carrier (7) or into the component transported by said carrier or into the component group (11).

8. Manufacturing module (1) according to any of claims 1 to 7, **characterized in that** the parts carrier (7) is positioned at a position within a grid unit that can be reached by at least two workstations (2) in temporal succession.

9. Manufacturing module (1) according to any of claims 1 to 8, **characterized in that** the number N of grid units is at least six, preferably exactly eight.

10. Method for operating a manufacturing module (1) according to any of claims 1 to 9, **characterized in that** the manufacturing module (1) has at least two parts manipulators which are present in the form of parts supply stations (3) and/or mounting aids (18), and the manufacturing module (1) has at least one workstation (2) designed as a handling device (4), the handling device (4) carrying out at least one work step on each of at least two parts manipulators, as a work step

- a part being removed from a parts supply station (3) and placed in a parts carrier (7) or a component already collected by said carrier or in a component group,
- or a part which is supplied by the parts supply station (3), or is already used in a parts carrier (7) or a component or a component group, being manipulated or processed by actuating the mounting aid (18).

11. Method according to claim 10, **characterized in that** at least two workstations (2) are fastened to the linear drive guide (6) and are moved along the axis of the linear drive guide (6), the workstations (2) independently assuming positions along the linear drive guide (6) and at least two workstations (2) being able to assume an identical position along the linear drive guide (6) in temporal succession.

**12.** Method according to either claim 10 or claim 11, **characterized in that** at least two workstations (2) alternately carry out work steps on the parts carrier (7) or on the component transported by said carrier or on the component group (11) or at least two adjacent workstations (2) simultaneously carry out work steps on the parts carrier (7) or on the component transported by said carrier or on the component group (11).

**13.** Method according to any of claims 10 to 12, **characterized in that** at least one workstation (2) which is designed as a handling device (4) and at least one workstation (2) which has a joining device such as in particular a laser welding head (12) carry out work steps on the parts carrier (7) or on the component transported by said carrier or on the component group (11).

**14.** Method according to any of claims 10 to 13, **characterized in that** the mounting aid (18) comprises a lever or toggle lever which is actuated by a workstation (2), as a result of which the mounting aid (18) carries out a processing or manipulating step on a part which is supplied by the parts supply station (3) or is already placed in the parts carrier (7) or a component or a component group, the force exerted by the mounting aid (18) in order to process or manipulate the part being greater than that which the workstation (2) applies in order to actuate the lever or toggle lever.

**15.** Method according to claim 14, **characterized in that** the force exerted by the mounting aid (18) is determined from the distance traveled by the workstation (2) when the lever or toggle lever is actuated or **in that** a pressure or force sensor is attached to the workstation (1) on the surface which acts as an actuating surface on the mounting aid (18), by means of which sensor the force expended by the workstation (1) is measured when the mounting aid (18) is actuated.

**Revendications**

**1.** Module de fabrication (1) comportant un bâti de machine et un guide d'entraînement linéaire (6) monté dessus, le long de l'axe duquel au moins un poste de travail (2) à entraînement linéaire peut se déplacer de façon automatisée, le module de fabrication ayant une longueur L en direction dudit axe et est limité latéralement par une paroi latérale (5), **caractérisée en ce qu'**elle comporte, sur sa longueur L, au moins deux N unités de trame, dans lequel, sur chaque unité de trame, un poste de distribution de pièces (3) peut être monté et un poste de travail (2) peut être fixé sur le guide d'entraînement linéaire (6), au moins deux postes de distribution de pièces (3) étant montés sur des unités de trame et au moins un poste de travail (2) étant fixé sur le guide d'entraînement linéaire (6) de manière à pouvoir se déplacer linéairement, le poste de travail étant conçu comme un dispositif de manipulation (4) et permettant de retirer des pièces d'au moins deux postes de distribution de pièces (3), et le nombre de postes de travail A étant inférieur ou égal à la valeur déterminée par la formule

$$A = N - F_{max} + 1$$

, dans laquelle la liberté de mouvement maximale $F_{max}$ est le nombre d'unités de trame comprises dans la plage comprenant les deux postes de distribution de pièces (3) les plus éloignés l'un de l'autre et desquelles des pièces doivent être retirées à travers un poste de travail (2).

**2.** Module de fabrication (1) selon la revendication 1, **caractérisé en ce qu'**au moins deux postes de travail (2) peuvent être fixés sur le guide d'entraînement linéaire (6) de manière à pouvoir se déplacer linéairement, au moins un poste de travail (2) étant de préférence un dispositif de traitement.

**3.** Module de fabrication (1) selon l'une des revendications 1 à 2, **caractérisé en ce qu'**au moins deux postes de travail (2) présentent chacun une unité de guidage linéaire (13) unitaire, chaque unité de guidage linéaire (13) comprenant un premier composant réglable le long du guide d'entraînement linéaire (6), c'est-à-dire dans la direction x, un deuxième composant réglable, le long d'un guide, sur le premier composant dans une direction qui présente un angle de 90° par rapport à la direction x, et un troisième composant réglable, le long d'un guide, sur le deuxième composant dans une direction qui présente un angle de 90° par rapport à la direction x et à la direction du mouvement du deuxième composant.

**4.** Module de fabrication (1) selon la revendication 3, **caractérisé en ce qu'**une unité de manipulation ou de traitement (14) est fixée au troisième composant de l'unité de guidage linéaire (13), laquelle unité de manipulation ou de traitement présente au moins un, de préférence trois axes rotatifs, et est équipée d'au moins une unité de travail (15) permettant d'effectuer au moins une opération de manipulation ou au moins une étape de traitement.

**5.** Module de fabrication (1) selon l'une des revendications 1 à 4, **caractérisé en ce que** la direction du mouvement d'un dispositif de transport (8) s'étend parallèlement à l'axe du guide d'entraînement linéaire (6), direction dans laquelle au moins un porte-pièce (7) peut être déplacé sur la longueur L du module de fabrication (1).

6. Module de fabrication (1) selon la revendication 5, **caractérisé en ce que** les postes de distribution de pièces (3) s'étendent du côté du module de fabrication (1) opposé au dispositif de transport (8) selon un angle de 90° par rapport à la direction du mouvement du porte-pièce (7).

7. Module de fabrication (1) selon l'une des revendications 5 à 6, **caractérisé en ce qu'**il est prévu au moins un poste de distribution de pièces (3) au moyen duquel une pièce (10) peut être insérée directement dans le porte-pièce (7) ou dans le composant transporté par celui-ci ou dans le groupe de composants (11).

8. Module de fabrication (1) selon l'une des revendications 1 à 7, **caractérisé en ce que** le porte-pièce (7) est positionné à une position dans une unité de trame, laquelle position peut être atteinte successivement dans le temps par au moins deux postes de travail (2).

9. Module de fabrication (1) selon l'une des revendications 1 à 8, **caractérisé en ce que** le nombre de N unités de trame est d'au moins six, de préférence exactement huit.

10. Procédé permettant de faire fonctionner un module de fabrication (1) selon l'une des revendications 1 à 9, **caractérisé en ce que** le module de fabrication (1) présente au moins deux manipulateurs de pièces qui sont présents en tant que postes de distribution de pièces (3) et/ou en tant qu'auxiliaire de montage (18), et le module de fabrication (1) présente au moins un poste de travail (2) qui est conçu comme dispositif de manipulation (4), le dispositif de manipulation (4) effectuant au moins une étape de travail sur au moins deux manipulateurs de pièces, une étape de travail consistant à

    - retirer une pièce d'une station de distribution de pièces (3) et à la placer dans un porte-pièce (7) ou un composant déjà logé par celui-ci ou dans un groupe de composants,
    - ou à manipuler ou traiter, par actionnement de l'auxiliaire de montage (18), d'une pièce qui est fournie par le poste de distribution de pièces (3), ou qui est déjà insérée dans un porte-pièce (7), dans un composant ou dans un groupe de composants.

11. Procédé selon la revendication 10, **caractérisé en ce qu'**au moins deux postes de travail (2) sont fixés au guide d'entraînement linéaire (6) et sont déplacés le long de l'axe du guide d'entraînement linéaire (6), les postes de travail (2) occupant indépendamment l'un de l'autre des positions le long du guide d'entraînement linéaire (6) et au moins deux postes de travail (2) pouvant occuper successivement dans le temps une position identique le long du guide d'entraînement linéaire (6).

12. Procédé selon l'une des revendications 10 à 11, **caractérisé en ce qu'**au moins deux postes de travail (2) effectuent alternativement des étapes de travail sur le porte-pièce (7) ou sur le composant ou le groupe de composants (11) transporté par celui-ci ou **en ce qu'**au moins deux postes de travail (2) adjacents effectuent simultanément des étapes de travail sur le porte-pièce (7) ou sur le composant ou le groupe de composants (11) transporté par celui-ci.

13. Procédé selon l'une des revendications 10 à 12, **caractérisé en ce qu'**au moins un poste de travail (2), qui est conçu comme dispositif de manipulation (4), et au moins un poste de travail (2) comportant un dispositif d'assemblage, notamment une tête de soudage au laser (12), effectuent des étapes de travail sur le porte-pièce (7) ou sur le composant ou groupe de composants (11) transporté par celui-ci.

14. Procédé selon l'une des revendications 10 à 13, **caractérisé en ce que** l'auxiliaire de montage (18) comprend un levier ou un levier à genouillère commandé par un poste de travail (2), l'auxiliaire de montage (18) effectuant une étape de traitement ou de manipulation sur une pièce fournie par le poste de distribution de pièces (3) ou déjà placée dans le porte-pièce (7), dans un composant ou dans un groupe de composants, la force appliquée par l'auxiliaire de montage (18) pour le traitement ou la manipulation de la pièce étant supérieure à celle appliquée par le poste de travail (2) pour actionner le levier ou le levier à genouillère.

15. Procédé selon la revendication 14, **caractérisé en ce que** la force appliquée par l'auxiliaire de montage (18) est déterminée à partir de la distance parcourue par le poste de travail (2) lors de l'actionnement du levier ou du levier à genouillère
ou **en ce qu'**au poste de travail (1), un capteur de pression ou de force est monté sur la surface qui sert de surface d'actionnement sur l'auxiliaire de montage (18), capteur à travers lequel la force appliquée par le poste de travail (1) lors de l'actionnement de l'auxiliaire de montage (18) est mesurée.

# Fig. 1

# Fig. 2

## Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014071432 A1
- WO 2014071433 A2